# EUROPEAN PATENT SPECIFICATION

(11) **EP 3 738 394 B1**
(45) Date of publication and mention of the grant of the patent: **09.11.2022**
(21) Application number: 19701277.6
(22) Date of filing: 09.01.2019
(51) Int. Cl.: H04W 76/18, H04W 74/08, H04W 76/15

(54) **SUL FAILURE HANDLING**
HANDHABUNG VON SUL-AUSFÄLLEN
GESTION DE DÉFAILLANCE DE SUL

(30) Priority: 11.01.2018 US 201862616241 P
(43) Date of publication of application: 18.11.2020
(73) Proprietor: Telefonaktiebolaget LM Ericsson (publ), 164 83 Stockholm (SE)
(72) Inventor: ORSINO, Antonino, 02430 Masala (FI); YILMAZ, Osman Nuri Can, 02280 ESPOO (FI); SUSITAIVAL, Riikka, 00100 Helsinki (FI)
(74) Representative: Ericsson
(86) International application number: PCT/SE2019/050009
(87) International publication number: WO 2019/139532

(56) References cited:
- US-A1- 2017 019 945
- US-A1- 2017 230 232
- KDDI CORPORATION: "Discussions on reporting SCG-RLF towards MeNB", 3GPP DRAFT; R2-141200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 22 March 2014 (2014-03-22), XP050792437, Retrieved from the Internet: URL:http://www.3gpp.org/ftp/Meetings_3GPP_ SYNC/RAN2/Docs/ [retrieved on 2014-03-22]
- ALCATEL-LUCENT ET AL: "Discussion on the remaining S-RLF issues in dual connectivity", 3GPP DRAFT; R2-142567 S-RLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 18 May 2014 (2014-05-18), XP050793664, Retrieved from the Internet: URL:http://www.3gpp.org/ftp/Meetings_3GPP_ SYNC/RAN2/Docs/ [retrieved on 2014-05-18]
- NEC: "Remaining issues in S-RLF", 3GPP DRAFT; R2-142411_REMAINING ISSUES IN S-RLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, South Korea; 20140519 - 20140523 9 May 2014 (2014-05-09), XP050818485, Retrieved from the Internet: URL:http://www.3gpp.org/ftp/tsg_ran/WG2_RL 2/TSGR2_86/Docs/ [retrieved on 2014-05-09]
- KYOCERA: "Consideration on SCG RLF", 3GPP DRAFT; R2-141379_SCG RLF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 22 March 2014 (2014-03-22), XP050792571, Retrieved from the Internet: URL:http://www.3gpp.org/ftp/Meetings_3GPP_ SYNC/RAN2/Docs/ [retrieved on 2014-03-22]
- CMCC: "Considerations on support of supplementary uplink frequency", 3GPP DRAFT; R2-1709093-SUL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318885, Retrieved from the Internet: URL:http://www.3gpp.org/ftp/Meetings_3GPP_ SYNC/RAN2/Docs/ [retrieved on 2017-08-20]
- INTERDIGITAL INC: "Random Access procedure on SUL", 3GPP DRAFT; R2-1712783 (R15 NR WI AI103144 RA PROCEDURE ON THE SUL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Reno, USA; 20171127 - 20171201 17 November 2017 (2017-11-17), XP051371686, Retrieved from the Internet: URL:http://www.3gpp.org/ftp/tsg%5Fran/WG2% 5FRL2/TSGR2%5F100/Docs/ [retrieved on 2017-11-17]

## Description

### TECHNICAL FIELD

The present disclosure generally relates to the field of wireless network communications, and more particularly, to a user equipment (UE) configured to receive data from a serving node via a downlink carrier and transmit data to the serving node via selective use of a first uplink carrier and an associated supplementary uplink (SUL) carrier, such that only one of the first uplink carrier and the associated SUL carrier is used by the UE at any given time.

### BACKGROUND

The 3rd-Generation Partnership Project (3GPP) is currently developing specifications for a mode of operation called E-UTRAN - New Radio Dual Connectivity (EN-DC), which refers to a dual connectivity situation where one serving node is an E-UTRAN (i.e., Long Term Evolution (LTE)) serving node, while the other is a serving node operating according to the 5th-generation wireless standards under development and commonly referred to as "New Radio" (NR). The NR serving node may operate as a secondary node in EN-DC, and may utilize, for example, higher frequencies than are typically used in conventional LTE deployments.

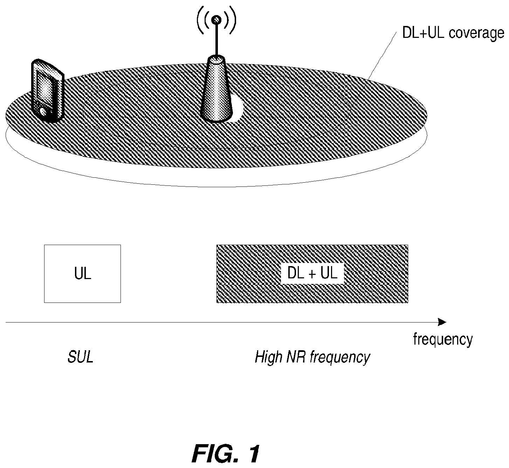

To improve the uplink coverage of an NR-based secondary node working on these high frequencies, a supplementary uplink (SUL) can be configured. With SUL, the UE is configured with two uplink (UL) carriers and one downlink (DL) carrier on the same cell served by the secondary node, but the UE is permitted to use only one of these two UL carriers at any given time. Switching between one carrier and the other, in this scenario, is controlled by the network through layer 1 (L1) signaling. When an SUL is configured to a UE, it is an additional uplink-only SCell (Secondary Cell), and the control of the SUL depends on a regular paired PCell (Primary Cell). An example of such a scenario is illustrated in Figure 1, where a downlink carrier and a corresponding uplink carrier are operated at a relatively high frequency, such that the coverage area for the uplink carrier is smaller than for the downlink carrier (e.g., because of the high frequency and power limitations of the UE.) An SUL carrier may operate at a lower frequency, and provides coverage that more closely matches the downlink coverage.

In contrast to carrier aggregation (CA) as specified for LTE networks, the UE configured with an SUL is not allowed to use both the SUL and its associated "ordinary" UL carrier at the same time; the network generally indicates which carrier to use at any given time. To facilitate accessing one or the other of these carriers, the UE may be configured with a contention-free random access resource. Otherwise, if no indication is provided by the network, the UE performs a contention-based random access procedure on the carrier (SUL or non-SUL) with the highest reference signal received power (RSRP) value.

When CA is configured for a given UE, the UE only has one Radio Resource Control (RRC) connection with the network. Further, at RRC connection establishment/re-establishment/handover, one serving cell provides the Network Access Stratum (NAS) mobility information, and at RRC connection re-establishment/handover, this same serving cell provides the security input. This cell is the PCell. In addition, depending on UE capabilities, one or more SCells can be configured, to form together with the PCell a set of serving cells. The configured set of serving cells for a UE configured for CA operation therefore always consists of one PCell and one or more SCells. Further, when dual connectivity is configured, it could be the case that one carrier under the secondary cell group (SCG) is used as the Primary SCell (PSCell). Hence, in this case, there may be one PCell and one or more SCells in the Master Cell Group (MCG) and one PSCell and one or more SCells in the Secondary Cell Group (SCG).

In a CA scenario, the reconfiguration, addition and removal of SCells can be performed by RRC. For handovers within a given radio access technology (RAT), such as intra-RAT handovers, RRC can also add, remove, or reconfigure SCells for usage with the target PCell. When adding a new SCell, dedicated RRC signaling is used for sending all required system information of the SCell. In other words, while in connected mode in a CA scenario, UEs need not acquire broadcasted system information directly from the SCells.

In LTE, a UE can detect a radio link failure (RLF) in three scenarios: (i) upon detecting a certain number of out-of-sync indications from the lower layers associated with the PCell within a given time; (ii) upon random access problem indication from the Medium Access Control (MAC) layer; or (iii) upon indication from the Radio Link Control (RLC) layer that the maximum number of retransmissions has been reached for a signaling radio bearer (SRB) or for a data radio bearer (DRB).

When RLF is detected, the UE prepares an RLF report, which includes, among other information, the measurement status of the serving and neighbor cells as of the moment when RLF was detected. The UE goes to IDLE mode, selects a cell following IDLE mode cell-selection procedure, where the selected cell could be the same serving node/cell or another node/cell, and starts the RRC re-establishment procedure with a cause value set to rlf-cause.

In the case of LTE dual connectivity (DC) where the master node (MN) and secondary node (SN) are both LTE cells, the RLF detection procedure is similar to that described above except that: for scenario (i), the concern is with the PCell of the MN; the MAC in scenario (ii) is the MCG MAC entity; and the RLC in scenario (iii) is the MCG RLC and the DRB in scenario (iii) corresponds to MCG and MCG-split DRBs.

On the other hand, failure on the secondary side in an LTE DC scenario, known as *SCGFailure,* is detected by: (a) upon detecting radio link failure for the SCG, in accordance with (i), (ii) and (iii) above (i.e., replace PCell for PSCell, MCG MAC for SCG MAC, and MCG/MCG-Split DRB for SCG DRB); (b) upon SCG change failure (i.e., not being able to finalize SCG change within a certain duration after the reception of an RRC connection reconfiguration message instructing the UE to do so); or (c) upon stopping uplink transmission towards the PSCell due to exceeding the maximum uplink transmission timing difference when *powerControlMode* is configured to 1.

Upon detecting *SCGFailure,* the UE sends an *SCGFailureInformation* message towards the MN, which also includes measurement reports, and the MN can either release the SN, change the SN/Cell, or reconfigure the SCG. Thus, a failure on the SCG will not lead to a re-establishment to be performed on the MCG, in contrast to RLF on the PCell.

In the context of LTE-NR interworking, 3GPP has agreed to adopt the same general principles, i.e., re-establishment in the case of RLF on the master leg and recovery via *SCGFailureInformation* and SN release/change/modification in the case of RLF on the secondary leg. Specifically, it has been agreed that, upon SgNB failures, the UE shall: suspend all SCG DRBs and suspend SCG transmission for MCG split DRBs and SCG split DRBs; suspend direct SCG SRB and SCG transmission for MCG split SRB; reset SCG-MAC; and send the *SCGFailureInformation* message to the master eNB (MeNB) with corresponding cause values.

Furthermore, the following agreements have been made for the user plane, for the event when RLF happens on the SCell while CA level duplication is employed: the RLC reports to RRC that the *maxNumberofRLC* retransmissions is reached; for a logical channel restricted to one or multiple SCells (i.e., logical channel configured for duplication), the UE reports the failure to the NR base station, referred to as a gNB (e.g., SCell-RLF), but no RRC re-establishment happens.

3GPP R2-142411 "Remaining issues in S-RLF" by NEC, 3GPP TSG RAN2 Meeting #86, Seoul, South Korea, 19 - 23 May, 2014, relates to reporting of S-RLF in connection with Dual Connectivity operation wherein the UE is in communication with both a MeNB and a SeNB. The UE reports S-RLF to MeNB. According to Proposal 7 a new UL RRC message is proposed for the S-RLF.

3GPP R2-1709093 "Considerations on support of supplementary uplink frequency" by CMCC, 3GPP TSG-RAN WG2 Meeting #99, Berlin, Germany, 21st-25th August 2017, discusses support for supplementary uplink frequency according to which a gNB can operate in a SUL+NR band combination manner, which means that one cell composes of one downlink frequency and two uplink frequencies. More specifically section 2.1 proposes broadcasting uplink resource information in system information for both SUL frequency and NR normal uplink frequency and section 2.2 discusses how to select PRACH resources from the two uplink frequencies.

3GPP R2-1712783 "Random Access procedure on SUL" by InterDigital Inc., 3GPP TSG-RAN WG2 #100, Reno, USA, Nov 27th to Dec 1st 2017 discusses Random Access Procedure on SUL.

### SUMMARY

The characteristics of an SUL and its associated UL carrier create potential problems with the detection and reporting of RLF. Accordingly, improved techniques for handling RLF in such scenarios are needed.

For example, a UE can be configured with an SUL carrier for the uplink either in a Non-StandAlone (NSA) or a StandAlone (SA) NR deployment scenario. When an SUL carrier is configured, the UE has at least two UL carriers (and only one DL) in the same cell, and the network may decide to switch the UE over the two UL carriers using the L1 signaling.

However, when the UE experiences an RLF on the SUL carrier, the UE should have a different behavior compared to the CA case, as the UE may be unable to continue with another carrier. In the CA case, RLF failure may be triggered, for example, by reaching a predetermined maximum number of RLC transmissions. When the RLF is detected on the PSCell or SCell, in a CA scenario, the RLF report would be sent to the network by the UE, and the network would take the necessary actions for the reconfiguration. On the other hand, when SUL is configured, the UE is allowed to use only one of the UL carriers at a given time, i.e., SUL or non-SUL, and thus the CA approach would not be suitable to be taken as the baseline when radio link problems arise on the SUL. If the approaches presently defined for CA were used, SUL failure would be followed by a subsequent re-establishment procedure, which would result in undesirable additional signaling overhead and a longer service interruption time.

Various methods and apparatuses disclosed herein address this problem by providing techniques for detecting and responding to radio link problems in the SUL.

The appended claims define the scope of protection. Any examples and technical descriptions of apparatuses and/or methods in the description and/or drawings not covered by the claims are presented not as embodiments of the invention but as background art or examples useful for understanding the invention,

### BRIEF DESCRIPTION OF THE FIGURES

Figure 1 illustrates supplementary uplink in EN-DC.
Figure 2 illustrates a block diagram of a serving node, according to some exemplary embodiments.
Figure 3 illustrates a flow diagram of a method in the serving node, according to some exemplary embodiments.
Figure 4 illustrates is a block diagram of a UE, according to some exemplary embodiments.
Figure 5 illustrates a flow diagram of a method in the UE, according to some exemplary embodiments.
Figure 6 schematically illustrates a telecommunication network connected via an intermediate network to a host computer, according to some exemplary embodiments.
Figure 7 is a generalized block diagram of a host computer communicating via a base station with a user equipment over a partially wireless connection, according to some exemplary embodiments.
Figures 8 to 11 are flowcharts illustrating example methods implemented in a communication system including a host computer, a base station and a user equipment.
Figure 12 is a block diagram illustrating a functional implementation of serving node, according to some exemplary embodiments.
Figure 13 is a block diagram illustrating a functional implementation of a UE, according to some exemplary embodiments.

### DETAILED DESCRIPTION OF EMBODIMENTS

Embodiments of the presently disclosed invention are described herein in the context of EN-DC, with those descriptions using terminology used in 3GPP specifications and standardization discussions. It will be appreciated, however, that the embodiments may be applied to similar scenarios in wireless networks that have similar functionalities, in relevant aspects.

The term supplementary uplink (SUL) carrier, as used herein, refers specifically to an UL carrier configured for a given UE along with another UL carrier between that same UE and the same serving node, such that the UE transmits data to the serving node via selective use of the SUL carrier and the other UL carrier with only one of the SUL carrier and the other UL carrier being used by the UE at any given time. This other UL carrier may be referred to herein as the "ordinary carrier or "ordinary UL carrier."

As noted above, a UE can be configured with an SUL carrier for the uplink either in a Non-StandAlone (NSA) or a StandAlone (SA) NR deployment scenario. When an SUL carrier is configured, the UE has at least two UL carriers (and only one DL) in the same cell, and the network may decide to switch the UE over the two UL carriers using the L1 signaling.

As discussed above, in a scenario where an SUL carrier is configured, upon an RLF over the SUL, the straightforward solution is to initiate an RRC re-establishment, thus setting up the whole radio link configuration from scratch. Alternatively, another approach is to simply leave the SUL carrier failed without taking any actions. However, either procedure causes a considerable service interruption time that cannot be tolerated, for example, when considering ultra-reliable and low-latency communication (URLLC).

The techniques and apparatuses disclosed herein are thus aimed at avoiding an RRC re-establishment by performing actions for de-activating only the SUL carrier where the RLF has been detected. According to embodiments of the invention, the UE can continue transmitting over the ordinary UL carrier that is not affected by the failure, whereas a new SUL carrier can be configured or added by the network. These techniques may also be applied the other way around, in some embodiments, where the UE may can switch from ordinary UL to the SUL uplink after detecting a failure in the ordinary UL.

The methods described herein may thus prevent re-establishment and unnecessary signaling thereof in the event of a detected SUL radio problem, e.g., while the ordinary UL carrier is still functional, or vice versa (where the detected radio problem is on the ordinary UL carrier, while the SUL is still functional). According to some embodiments, when RLF is detected on the SUL carrier, for example, the UE has two possible actions to perform.

If the UE has been allocated with a contention-free random access resource, the UE will perform a contention-free random access procedure to initiate a UL carrier switch from the SUL carrier to the other UL carrier.

If the UE has not been allocated with a contention-free resource, UE will perform contention-based random access to initiate the UL carrier switch.

In some embodiments, if the network does not explicitly tell the UE which carrier to use, the UE performs UL selection based on the RSRP threshold. Alternatively, the UE may simply be instructed to perform the random access in whichever UL did not fail.

If the UL switch succeeds, the UE may send a report to indicate the problem to the network. The report may be sent to, for example, the serving node with which the ordinary UL carrier and the SUL carrier are configured, Otherwise, the UE may apply a RRC re-establishment procedure. In the case of EN-DC, the UE may also send the RLF report within the *SCGFailureInformation* message.

As discussed above, when the SUL carrier is configured, the UE has two UL carriers (and only one DL carrier) in the same cell, and the network may decide to switch the UE over the two UL carriers using L1 signaling. Therefore, there are some differences with the legacy CA approach where the UE can transmit simultaneously over multiple carriers (mostly in the downlink direction). It should be understood that there can be separate random access, RA, procedures over the SUL and ordinary UL carrier. In particular, for contention-based RA, if the network does not explicitly tell the UE which carrier to use, the UE may perform UL selection based on the RSRP threshold, for initial access. Otherwise, if the network indicates to the UE which UL carrier to connect, contention-free RA may be used.

In the event that an RLF or, more generally, a radio link problem, is detected on the SUL carrier or the associated ordinary carrier, the aim is to recover the connection, if possible, without incurring the re-establishment procedure. The radio link problem may be detected in several ways. The radio link problem is detected, for example, when a maximum number of RLC retransmissions has been reached. Alternatively, the radio link problem is detected if the measured RSRP is too low (given a related threshold), or upon a failure to decode the physical downlink control channel (PDCCH) and/or the physical downlink shared channel (PDSCH) due to power signal quality, e.g., low RSRP or Reference Signal Received Quality (RSRQ). Further, the radio link problem may be detected based upon receiving *N* out-of-sync indications from the lower layers, in a manner similar to the RLF and Radio Link Management (RLM) procedures in LTE, or upon receiving indication from the Medium Access Control (MAC) that random access has failed.

In several embodiments as described herein, when the UE detects an RLF over the SUL or ordinary UL carrier, the UE starts a RA procedure with which has been configured (i.e., contention-free or contention-based) over the other UL carrier, e.g., over the ordinary UL carrier. If the RA procedure succeeds, then a failure report is sent by the UE to the network (in the case of EN-DC, this is represented by the SN), to inform the network that the SUL or UL carrier has failed. If the UE has been allocated with a contention-free RA resource, the UE will perform contention-free RA to initiate the SUL or UL carrier switch. If the UE has not been allocated with a contention-free resource, the UE will perform contention-based RA to initiate the SUL or UL carrier switch. If the network does not explicitly tell the UE which carrier to use, the UE may perform UL selection based on the RSRP threshold, in some embodiments. Alternatively, the UE may simply choose the UL in which the failure did not happen. Note that once a carrier has failed, it would typically not be the case that the RSRP estimated over the failed carrier is above the threshold configured by the network. Thus, most likely the UE will perform the RA on the carrier where the failure did not happen.

If the UL switch is performed correctly, the UE reports the failure to the network, e.g., using the *SULFailureReport* message, so that the network can take the necessary actions. In this way, the network can be informed of the failure over the SUL or UL carrier by recovering, at the same time, the connection from the experienced RLF. Regarding the usage of the *SULFailureReport,* the message has to be enhanced with additional information regarding SUL, such as a SUL carrier identity, the transmission direction (DL or UL), and the SUL's latest measurements. Alternatively, the *SULFailureReport* can be an enhancement of the existing *SCGFailurelnformation.* However, the *SCGFailureReport* should be sent only if both UL carriers fail (or if it is not possible to do the UL switch). In this case, the *SCGFailurelnformation* is sent to the MN, for forwarding to the SN. If the sending of the *SCGFailureInformation* is not possible (e.g., in a standalone deployment where is thus no MN and SN), the UE starts the RRC re-establishment procedure.

Further, the NR node serving the ordinary UL carrier and the SUL carrier (represented by the SN in the case of EN-DC) can detect the radio link failure on the SUL or UL carrier indirectly (via UE reporting) when it receives the *SULFailureReport* or *SCGFailurelnformation* from the UE. Alternatively, the NR node may also detect the SUL or UL failure indirectly when it receives the *SULFailureReport* or *SCGFailureInformation* from another node by means of *SCGFailurelnformation.* The NR node may also detect the SUL or UL failure directly by counting the erroneous packets or the RLC retransmissions not received after triggering each retransmission (by sending an RLC status report). Alternatively, the NR node may detect the SUL or UL failure directly. In this case, the NR node may assume that that the SCG leg has failed or is about to fail if it detects that the SRS signal quality or strength becomes much lower than a certain expected threshold, (N)ACKs anticipated from the UE are not received on time, signal-to-interference-plus-noise ratio (SINR) is above a given threshold, or channel quality indicator (CQI) is of a bad value, etc.

When the network is informed (i.e., through the *SULFailureReport* or *SCGFailurelnformation*) or detects the RLF over the SUL or UL carrier, the SUL or UL carrier may be released. Upon the release of the failed carrier, the network may start measurements over the possible SUL or UL carriers that have been previously indicated by the UE through the *SULFailureReport* or *SCGFailurelnformation.* After starting the measurements to select the most suitable new SUL or UL carrier to be added in substitution of the failed carrier, the NR node may configure the UE to use a new SUL or UL carrier with an indication to use a contention free RACH resource. Alternatively, the NR node may configure the UE to use a new SUL or UL carrier with no dedicated RACH resource allocation. Further, the NR node may immediately decide to send a downlink control information (DCI) command (L1 signaling) to the UE with the indication to switch to SUL or the ordinary UL carrier.

Various features may each apply to one or several embodiments of the present invention, in various combinations. Some of these embodiments are further described below.

### UE embodiments

According to an embodiment, when an SUL carrier is configured and a UE detects a radio link problem on the SUL carrier, the UE may initiate the UL switch to the ordinary UL carrier, by sending a RACH preamble (sequence) to the network in the ordinary UL carrier. It will be appreciated that a RACH preamble is an example of an RA message.

In another embodiment, when an SUL carrier is configured and a UE detects a radio link problem on the ordinary UL carrier, the UE initiates the UL switch to SUL by sending a RACH preamble (sequence) to the network in the SUL.

In an embodiment, if the UE has been allocated with contention-free RA resource, the UE performs contention-free RA to initiate the UL carrier switch. If the UE has not been allocated with a contention-free resource, the UE performs contention-based RA to initiate the UL carrier switch. If the network does not explicitly tell the UE which carrier to use, the UE may perform UL selection based on an RSRP threshold. Alternatively, the UE may simply choose the uplink in which the failure did not happen.

In some embodiments, the radio link problem is detected upon a maximum number of RLC retransmissions being reached. In some embodiments, the radio link problem is detected if the measured RSRP is too low, given a related threshold.

In some embodiments, the radio link problem is detected upon a failure to decode one or more PDCCH messages, e.g., due to power signal quality. In some embodiments, the radio link problem is detected upon a failure to decode one or more PDSCH messages, e.g., due to power signal quality.

In some embodiments, the radio link problem is detected upon receiving N out-of-sync indications from the lower layers, similar to RLF/RLM procedure in LTE. In some embodiments, the radio link problem is detected upon receiving indication from the MAC that random access has failed.

In some embodiments, upon switching to the ordinary SUL or UL carrier, the UE sends an *SULFailureReport* towards the network node with an indication of the failed SUL or UL carrier.

In some embodiments, a UE employing SUL or UL carrier keeps track of the association of the RLC entity and the carrier to which the RLC packets from that entity are being sent to, and it also counts the number of failures that resulted from using that carrier. Here, the failure could be interpreted from non-received ACKs or received NACKs. In some embodiments, the failure count of the carrier is per RLC packet. That is, a failure counter can be initiated whenever an RLC packet is sent over a given carrier, and incremented each time there is a failure or an indication for failure (e.g., non-received ACK). If the RLC packet is successfully sent, the failure count is reset. If the UE performs a UL switching, the failure counter is reset. In some of these embodiments, if the maximum number of failures or non-received ACKs is reached (a value configured by the network or by the UE), the UE considers the threshold for reporting *SULFailureReport* to have been reached.

In some embodiments, the failure count is per carrier, regardless of which RLC packet it is transmitting. The failure counter is updated for each failure or a failure indication, within a given time window (a configurable parameter/value). If a certain number of or percentage of failures (as compared to the successful ones) are reached (also configurable values) within the time window, the UE considers the threshold for reporting *SULFailureReport* is reached.

In some embodiments, the *SULFailureReport* contains information indicating a failure was detected on the SUL or UL carrier. The UE may also include in the *SULFailureReport* the allowed frequencies and bandwidths with which the UE can be configured. The UE may also include, in the *SULFailureReport,* the DL measurements from possible SUL or UL carrier candidates, in some embodiments, so that UL and DL reciprocity can be exploited, e.g., in a time-division-duplex (TDD) context. The *SULFailureReport* may be enhanced with additional SUL information. In some embodiments, the *SULFailureReport* is an enhanced *SCGFailurelnformation* report. In some embodiments, the failure report includes the transmission direction (UL or DL), the SUL carrier identity, and/or the SUL candidates' measurements. In some embodiments, when the failure is detected on the SUL or UL carrier in case of dual connectivity (with LTE or NR), the UE sends the content of *SULFailureReport* within a *SCGFailurelnformation.* It may be the case, in some embodiments, that *SCGFailurelnformation* can be sent only if UL switch fails.

In some embodiments, when the failure is detected on both the SUL and ordinary UL, the UE triggers RLF and radio-establishment.

### Non-claimed Network embodiments

In some embodiments, the serving node (e.g., the serving NR node) detects the SUL or UL failure indirectly, but via UE reporting, when it receives the *SULFailureReport* or *SCGFailurelnformation* from the UE. In some instances or embodiments, the NR node may also detect the SUL or UL failure indirectly when it receives the *SULFailureReport* or *SCGFailurelnformation* from another node by means of *SCGFailurelnformation.*

Alternatively, the NR node may detect the SUL or UL failure directly. In this case, the NR node may assume that that the SCG leg has failed or is about to fail if it detects that the SRS signal quality or strength becomes much lower than a certain expected threshold, ACKs or NACKs anticipated from the UE are not received on time, SINR is below a given threshold, or CQI is of a bad value, etc.

In some embodiments, the NR node may also detect the SUL or UL failure directly by counting the erroneous packets and/or by counting unreceived RLC retransmissions triggered by sending RLC status reports to the UE.

In some embodiments, after learning of an SUL carrier failure or ordinary carrier failure, the NR node releases the current SUL or UL carrier. In some embodiments, the NR node starts measurements over the candidate SUL or UL carrier signaled in the *SULFailureReport* or *SCGFailureInformation.*

In some embodiments, the NR node configures the UE to use a new SUL or UL carrier with an indication to use a contention-free RACH resource. In some embodiments, the NR node configures the UE to use a new SUL or UL carrier with no dedicated RACH resource allocation.

In some embodiments, upon learning of a failure of a SUL carrier or the ordinary carrier, the NR node immediately sends a DCI command (L1 signaling) to the UE with the indication to switch to SUL carrier or the ordinary UL carrier. Of course, in embodiments where the NR node learns of the failure from the UE only after the UE has switched uplinks, the UE has already been switched to the SUL or ordinary uplink and this signaling is not necessary.

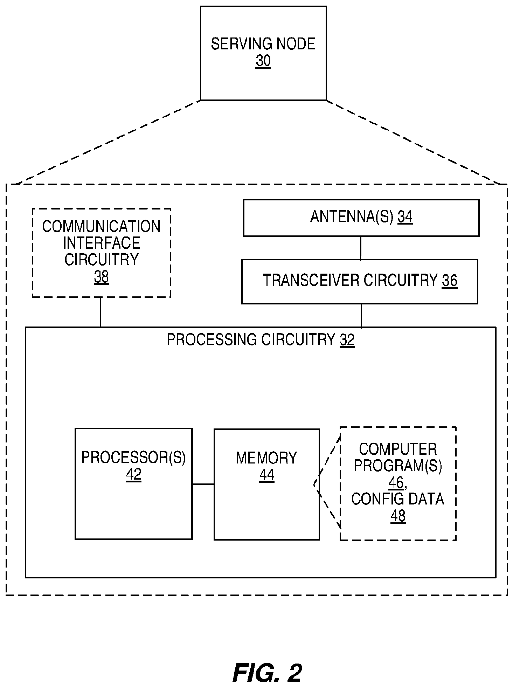

Figure 2 illustrates a serving node 30, which may be configured to carry out one or more of the disclosed techniques. Serving node 30 may be a base station, such as an evolved Node B (eNodeB), Node B or gNB. While a base station is shown in Figure 2, the base station operations can be performed by other kinds of network access nodes or relay nodes. In the non-claimed embodiments described below, serving node 30 will be described as being configured to operate as a cellular network access node in an LTE network or NR network.

Those skilled in the art will readily appreciate how each type of serving node may be adapted to carry out one or more of the methods and signaling processes described herein, e.g., through the modification of and/or addition of appropriate program instructions for execution by processing circuitry 32.

Serving node 30 facilitates communication between wireless terminals, other network access nodes and/or the core network. Serving node 30 may include communication interface circuitry 38 that includes circuitry for communicating with other nodes in the core network, radio nodes, and/or other types of nodes in the network for the purposes of providing data and/or cellular communication services. Serving node 30 communicates with wireless devices using antennas 34 and transceiver circuitry 36. Transceiver circuitry 36 may include transmitter circuits, receiver circuits, and associated control circuits that are collectively configured to transmit and receive signals according to a radio access technology, for the purposes of providing cellular communication services.

Serving node 30 also includes one or more processing circuits 32 that are operatively associated with transceiver circuitry 36 and, in some cases, the communication interface circuitry 38. Processing circuitry 32 comprises one or more digital processors 42, e.g., one or more microprocessors, microcontrollers, Digital Signal Processors (DSPs), Field Programmable Gate Arrays (FPGAs), Complex Programmable Logic Devices (CPLDs), Application Specific Integrated Circuits (ASICs), or any mix thereof More generally, processing circuitry 32 may comprise fixed circuitry, or programmable circuitry that is specially configured via the execution of program instructions implementing the functionality taught herein, or may comprise some mix of fixed and programmed circuitry. Processor 42 may be multi-core, i.e., having two or more processor cores utilized for enhanced performance, reduced power consumption, and more efficient simultaneous processing of multiple tasks.

Processing circuitry 32 also includes a memory 44. Memory 44, in some embodiments, stores one or more computer programs 46 and, optionally, configuration data 48. Memory 44 provides non-transitory storage for the computer program 46 and it may comprise one or more types of computer-readable media, such as disk storage, solid-state memory storage, or any mix thereof. Here, "non-transitory" means permanent, semi-permanent, or at least temporarily persistent storage and encompasses both long-term storage in non-volatile memory and storage in working memory, e.g., for program execution. By way of non-limiting example, memory 44 comprises any one or more of SRAM, DRAM, EEPROM, and FLASH memory, which may be in processing circuitry 32 and/or separate from the processing circuitry 32. Memory 44 may also store any configuration data 48 used by serving node 30. Processing circuitry 32 may be configured, e.g., through the use of appropriate program code stored in memory 44, to carry out one or more of the methods and/or signaling processes detailed hereinafter.

Serving node 30 is configured, according to some embodiments, to communicate, via processing circuitry 32 and transceiver circuitry 36, with a UE that is configured to receive data from the serving node via a downlink carrier and to transmit data to the serving node via selective use of a first uplink carrier and an associated SUL carrier, such that only one of the first uplink carrier and the associated SUL carrier is used by the UE at any given time. Processing circuitry 32 is also configured to receive, from the UE via the first uplink carrier or the associated SUL carrier, an uplink failure report. The uplink failure report indicates a failure of the first uplink carrier or the associated SUL carrier. Processing circuitry 32 is also configured to release the first uplink carrier or the associated SUL carrier, with respect to the UE, in response to said receiving.

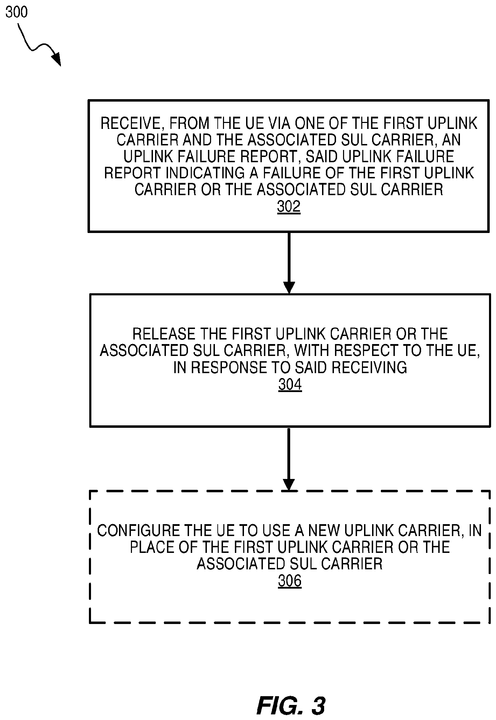

Processing circuitry 32 of serving node 30 may also be configured to perform the method 300 shown in Figure 3. Method 300 includes receiving, 302, from the UE via one of the first uplink carrier and the associated SUL carrier, an uplink failure report, said uplink failure report indicating a failure of the first uplink carrier or the associated SUL carrier and releasing, 304, the first uplink carrier or the associated SUL carrier, with respect to the UE, in response to said receiving (block 304).

Method 300 may further include, in some embodiments, configuring, 306, the UE to use a new uplink carrier for communicating with the serving node, in place of the first uplink carrier or the associated SUL carrier. This configuring may include providing the UE with a contention-free RA resource for use with the new uplink carrier. In Figure 3, this configuring step is illustrated with a dashed outline, to indicate that it need not be present in every instance or implementation of the illustrated method.

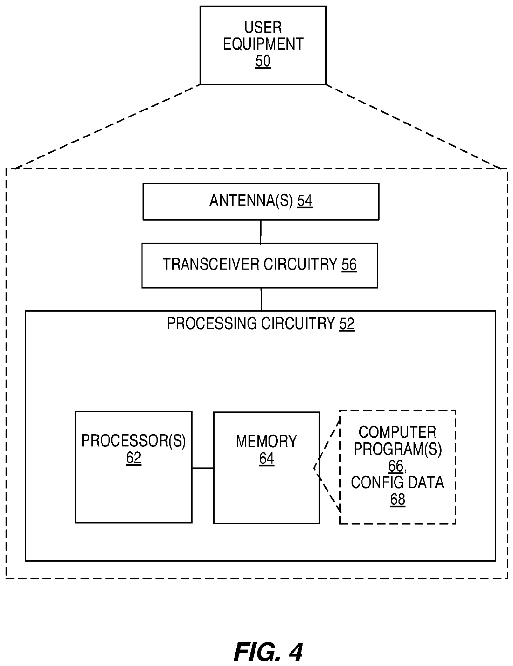

Figure 4 illustrates a diagram of a wireless device, shown as UE 50, according to some embodiments. UE 50 may be considered to represent any wireless terminals that may operate in a network. Other examples may include a communication device, target device, device to device (D2D) UE, machine type UE or UE capable of machine to machine communication (M2M), a sensor equipped with UE, PDA (personal digital assistant), Tablet, mobile terminal, smart phone, laptop embedded equipped (LEE), laptop mounted equipment (LME), USB dongles, Customer Premises Equipment (CPE), etc.

UE 50 is configured to communicate with a radio network node or base station in a wide-area cellular network via antennas 54 and transceiver circuitry 56. Transceiver circuitry 56 may include transmitter circuits, receiver circuits, and associated control circuits that are collectively configured to transmit and receive signals according to one or more radio access technology, for the purposes of using cellular communication services. These radio access technologies may comprise NR and LTE, for example.

UE 50 also includes one or more processing circuits 52 that are operatively associated with the radio transceiver circuitry 56. Processing circuitry 52 comprises one or more digital processing circuits, e.g., one or more microprocessors, microcontrollers, DSPs, FPGAs, CPLDs, ASICs, or any mix thereof. More generally, processing circuitry 52 may comprise fixed circuitry, or programmable circuitry that is specially adapted via the execution of program instructions implementing the functionality taught herein, or may comprise some mix of fixed and programmed circuitry. Processing circuitry 52 may be multi-core.

Processing circuitry 52 also includes a memory 64. Memory 64, in some embodiments, stores one or more computer programs 66 and, optionally, configuration data 68. Memory 64 provides non-transitory storage for computer program 66 and it may comprise one or more types of computer-readable media, such as disk storage, solid-state memory storage, or any mix thereof. By way of non-limiting example, memory 64 comprises any one or more of SRAM, DRAM, EEPROM, and FLASH memory, which may be in processing circuitry 52 and/or separate from processing circuitry 52. Memory 64 may also store any configuration data 68 used by UE 50. Processing circuitry 52 may be configured, e.g., through the use of appropriate program code stored in memory 64, to carry out one or more of the methods and/or signaling processes detailed hereinafter.

According to some embodiments, UE 50 is configured, via transceiver circuitry 56, to receive data from the serving node via a downlink carrier and transmit data to the serving node via selective use of a first uplink carrier and an associated SUL carrier, such that only one of the first uplink carrier and the associated SUL carrier is used by the UE at any given time. Processing circuitry 52 of UE 50 is also configured to detect a radio link problem for a currently used one of the first uplink carrier and the associated SUL carrier and, responsive to said detecting, transmit a random access preamble to the serving node on the first uplink carrier or the associated SUL carrier.

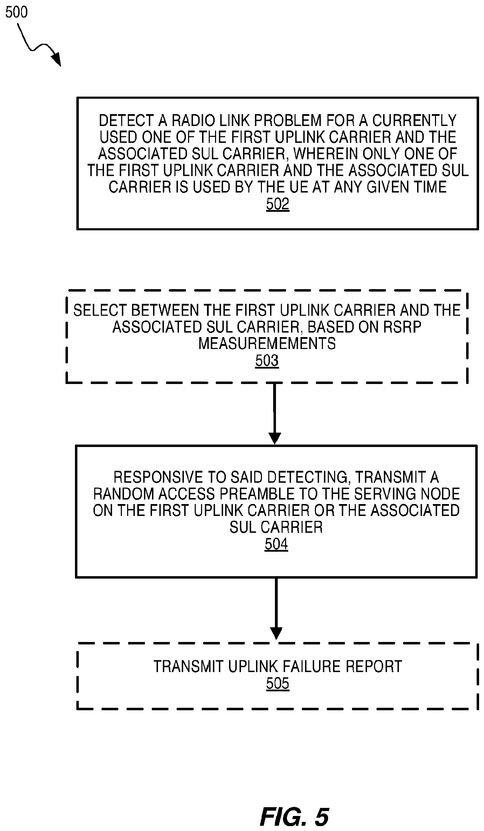

According to some embodiments, processing circuitry 52 of the UE 50 is configured to perform the method 500 shown in Figure 5. Method 500 includes detecting, 502, a radio link problem for a currently used one of the first uplink carrier and the associated SUL carrier and, responsive to said detecting, transmitting, 504, a random access preamble to the serving node on the first uplink carrier or the associated SUL carrier. In a dual-connectivity configuration, the serving node may provide a secondary cell to the UE.

In some cases, the transmitting of the random access preamble may be on the currently unused one of the first uplink carrier and the associated SUL carrier, so as to initiate a switch from the currently used one the first uplink carrier and the associated SUL carrier to the currently unused one of the first uplink carrier and the associated SUL carrier. In other cases, the currently used one of the first uplink carrier and the associated SUL carrier may be the associated SUL carrier, and the currently unused one of the first uplink carrier and the associated SUL carrier may be the first uplink carrier.

In either case, transmitting the random access preamble to the serving node may include using a contention-free random access resource previously allocated to the UE for the currently unused one of the first uplink carrier and the associated SUL carrier. Transmitting the random access preamble to the serving node may also include performing a contention-based random access procedure on the currently unused one of the first uplink carrier and the associated SUL carrier, responsive to determining that no contention-free random access resource is allocated to the UE for the currently unused one of the first uplink carrier and the associated SUL carrier.

Method 500 may further include selecting, 503, between the first uplink carrier and the associated SUL carrier to determine which carrier to use for transmitting the random access preamble, based on reference signal received power (RSRP). As described above, other approaches for selecting the carrier for random access may be used - accordingly, this step is shown in Figure 5 with a dashed outline, to indicate that it may not appear or may differ, in various embodiments.

Detecting the radio link problem may, in some embodiments, include determining that a maximum number of RLC transmissions has been reached on the currently used one of the first uplink carrier and the associated SUL carrier. Detecting the radio link problem may, in some embodiments, include determining that a RSRP is below a predetermined threshold. Detecting the radio link problem may, in some embodiments, include determining that a predetermined number of out-of-sync indications have been received, in a time interval of a predetermined length.

Detecting the radio link problem may, in some embodiments, be based upon a failure to decode one or more PDCCH messages or a failure to decode one or more PDSCH messages. Detecting the radio link problem may, in some embodiments, be based upon receiving an indication that random access to the currently used one of the first uplink carrier and the associated SUL carrier has failed.

Detecting the radio link problem may also include tracking associations between RLC entities and packets transmitted on the currently used one of the first uplink carrier and the associated SUL carrier, and counting unsuccessful transmissions of packets per RLC entity, and detecting the radio link problem based on the counted unsuccessful transmissions. Method 500 can then include counting unsuccessful transmissions per packet and detecting the radio link problem based on the counted unsuccessful transmissions per packet.

In some embodiments, method 500 may include, upon a successful switch to the currently unused one of the first uplink carrier and the associated SUL carrier, transmitting, 505, an uplink failure report to the serving node, said uplink failure report indicating a failure. The uplink failure report may identify which uplink carrier the indicated failure corresponds to. The uplink failure report may also include information indicating frequencies or bandwidths in which an uplink carrier can be configured for the UE. The uplink failure report may further include downlink measurements for carriers corresponding to one or more uplink carriers that could be configured for the UE.

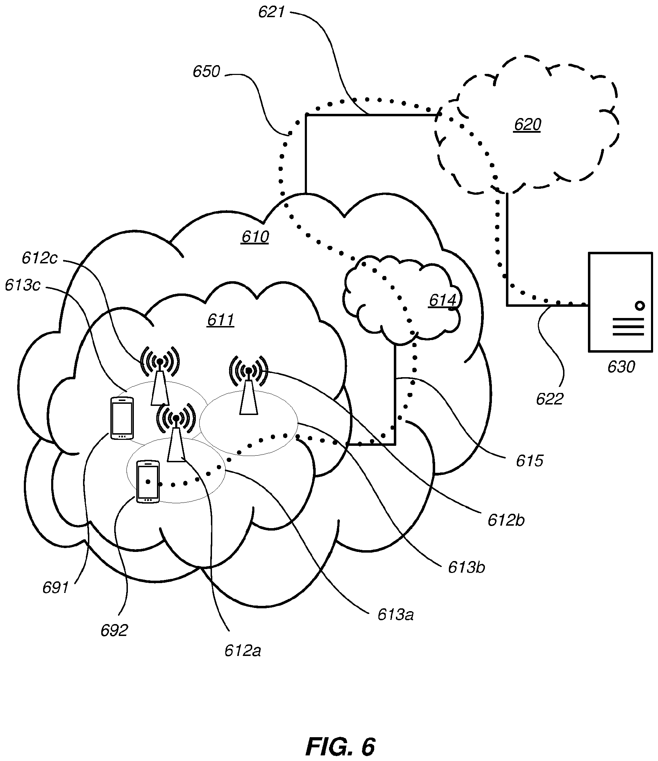

Figure 6, according to some embodiments, illustrates a communication system that includes a telecommunication network 610, such as a 3GPP-type cellular network, which comprises an access network 611, such as a radio access network, and a core network 614. The access network 611 comprises a plurality of base stations 612a, 612b, 612c, such as NBs, eNBs, gNBs or other types of wireless access points, each defining a corresponding coverage area 613a, 613b, 613c. Each base station 612a, 612b, 612c is connectable to the core network 614 over a wired or wireless connection 615 and may be configured as the serving node 30 described above. A first UE 691 located in coverage area 613c is configured to wirelessly connect to, or be paged by, the corresponding base station 612c. A second UE 692 in coverage area 613a is wirelessly connectable to the corresponding base station 612a. While a plurality of UEs 691, 692 are illustrated in this example, the disclosed embodiments are equally applicable to a situation where a sole UE is in the coverage area or where a sole UE is connecting to the corresponding base station 612. The UE 691 may be configured to receive data from the base station/serving node via a downlink carrier and to transmit data to the base station/serving node via selective use of a first uplink carrier and an associated SUL carrier, such that only one of the first uplink carrier and the associated SUL carrier is used by the UE at any given time.

The telecommunication network 610 is itself connected to a host computer 630, which may be embodied in the hardware and/or software of a standalone server, a cloud-implemented server, a distributed server or as processing resources in a server farm. The host computer 630 may be under the ownership or control of a service provider, or may be operated by the service provider or on behalf of the service provider. The connections 621, 622 between the telecommunication network 610 and the host computer 630 may extend directly from the core network 614 to the host computer 630 or may go via an optional intermediate network 620. The intermediate network 620 may be one of, or a combination of more than one of, a public, private or hosted network; the intermediate network 620, if any, may be a backbone network or the Internet; in particular, the intermediate network 620 may comprise two or more sub-networks (not shown).

The communication system of Figure 6 as a whole enables connectivity between one of the connected UEs 691, 692 and the host computer 630. The connectivity may be described as an over-the-top (OTT) connection 650. The host computer 630 and the connected UEs 691, 692 are configured to communicate data and/or signaling via the OTT connection 650, using the access network 611, the core network 614, any intermediate network 620 and possible further infrastructure (not shown) as intermediaries. The OTT connection 650 may be transparent in the sense that the participating communication devices through which the OTT connection 650 passes are unaware of routing of uplink and downlink communications. For example, a base station 612 may not or need not be informed about the past routing of an incoming downlink communication with data originating from a host computer 630 to be forwarded (e.g., handed over) to a connected UE 691. Similarly, the base station 612 need not be aware of the future routing of an outgoing uplink communication originating from the UE 691 towards the host computer 630.

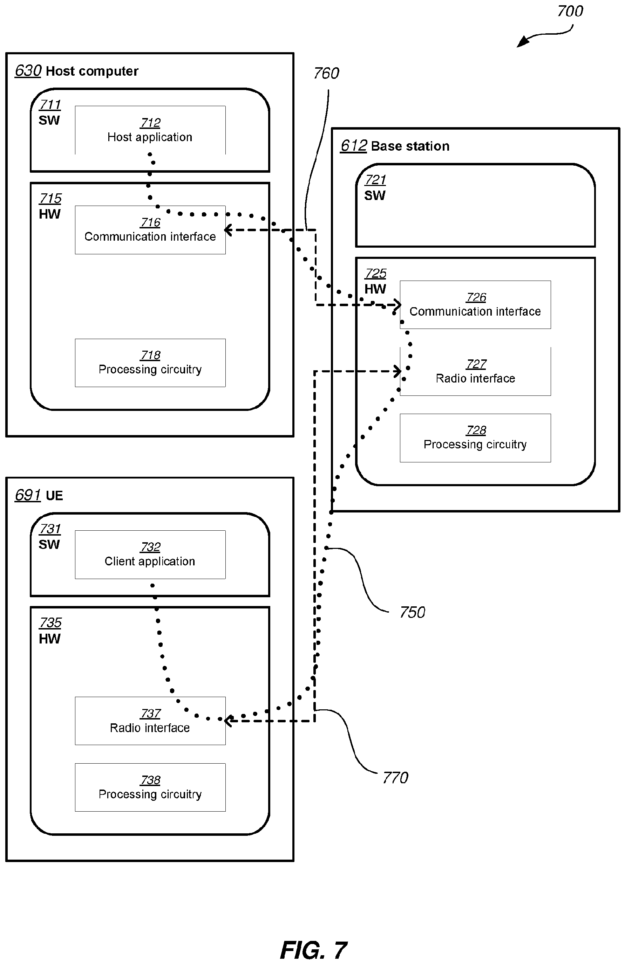

Example implementations, in accordance with an embodiment, of the UE, base station and host computer discussed in the preceding paragraphs will now be described with reference to Figure 7. In a communication system 700, a host computer 630 comprises hardware 715 including a communication interface 716 configured to set up and maintain a wired or wireless connection with an interface of a different communication device of the communication system 700. The host computer 630 further comprises processing circuitry 718, which may have storage and/or processing capabilities. In particular, the processing circuitry 718 may comprise one or more programmable processors, application-specific integrated circuits, field programmable gate arrays or combinations of these (not shown) adapted to execute instructions. The host computer 630 further comprises software 711, which is stored in or accessible by the host computer 630 and executable by the processing circuitry 718. The software 711 includes a host application 712. The host application 712 may be operable to provide a service to a remote user, such as a UE 691 connecting via an OTT connection 750 terminating at the UE 691 and the host computer 630. In providing the service to the remote user, the host application 712 may provide user data which is transmitted using the OTT connection 750.

The communication system 700 further includes a base station 612 provided in a telecommunication system and comprising hardware 725 enabling it to communicate with the host computer 630 and with the UE 691. The hardware 725 may include a communication interface 726 for setting up and maintaining a wired or wireless connection with an interface of a different communication device of the communication system 700, as well as a radio interface 727 for setting up and maintaining at least a wireless connection 770 with a UE 691 located in a coverage area (not shown in Figure 7) served by the base station 612. The communication interface 726 may be configured to facilitate a connection 760 to the host computer 630. The connection 760 may be direct or it may pass through a core network (not shown in Figure 7) of the telecommunication system and/or through one or more intermediate networks outside the telecommunication system. In the embodiment shown, the hardware 725 of the base station 612 further includes processing circuitry 728, which may comprise one or more programmable processors, application-specific integrated circuits, field programmable gate arrays or combinations of these (not shown) adapted to execute instructions. The base station 612 further has software 721 stored internally or accessible via an external connection.

The communication system 700 further includes the UE 691 already referred to. Its hardware 735 may include a radio interface 737 configured to set up and maintain a wireless connection 770 with a base station serving a coverage area in which the UE 691 is currently located. The hardware 735 of the UE 691 further includes processing circuitry 738, which may comprise one or more programmable processors, application-specific integrated circuits, field programmable gate arrays or combinations of these (not shown) adapted to execute instructions. The UE 691 further comprises software 731, which is stored in or accessible by the UE 691 and executable by the processing circuitry 738. The software 731 includes a client application 732. The client application 732 may be operable to provide a service to a human or non-human user via the UE 691, with the support of the host computer 630. In the host computer 630, an executing host application 712 may communicate with the executing client application 732 via the OTT connection 750 terminating at the UE 691 and the host computer 630. In providing the service to the user, the client application 732 may receive request data from the host application 712 and provide user data in response to the request data. The OTT connection 750 may transfer both the request data and the user data. The client application 732 may interact with the user to generate the user data that it provides.

It is noted that the host computer 630, base station 612 and UE 691 illustrated in Figure 7 may be identical to the host computer 630, one of the base stations 612a, 612b, 612c and one of the UEs 691, 692 of Figure 6, respectively. This is to say, the inner workings of these entities may be as shown in Figure 7 and independently, the surrounding network topology may be that of Figure 6.

In Figure 7, the OTT connection 750 has been drawn abstractly to illustrate the communication between the host computer 630 and the user equipment 691 via the base station 612, without explicit reference to any intermediary devices and the precise routing of messages via these devices. Network infrastructure may determine the routing, which it may be configured to hide from the UE 691 or from the service provider operating the host computer 630, or both. While the OTT connection 750 is active, the network infrastructure may further take decisions by which it dynamically changes the routing (e.g., on the basis of load balancing consideration or reconfiguration of the network).

The wireless connection 770 between the UE 691 and the base station 612 is in accordance with the teachings of the embodiments described throughout this disclosure, such as provided by UE 50 and serving node 30, along with the corresponding methods 300 and 500. The various embodiments described herein avoid an RRC re-establishment by performing actions for de-activating only the SUL carrier where the RLF has been detected. In this way, the UE can continue transmitting over the ordinary UL carrier that is not affected by the failure whereas a new SUL carrier can be configured/added by the network. These techniques may also be applied the other way around, in some embodiments, where the UE may can switch from ordinary uplink to the SUL uplink after detecting a failure in the ordinary UL.

The methods described herein may thus prevent re-establishment and unnecessary signaling thereof in the event of a detected SUL radio problem, e.g., while the ordinary UL carrier is still functional, or vice versa (where the detected radio problem is on the ordinary UL carrier, while the SUL is still functional). This, in turn, improves the performance of OTT services provided to the UE 691 using the OTT connection 750, in which the wireless connection 770 forms the last segment. More precisely, the teachings of these embodiments may improve the data rate, capacity, latency and/or power consumption for the network and UE 691 using the OTT connection 750 and thereby provide benefits such as reduced user waiting time, more capacity, better responsiveness, and better device battery time.

A measurement procedure may be provided for the purpose of monitoring data rate, latency and other factors on which the one or more embodiments improve. There may further be an optional network functionality for reconfiguring the OTT connection 750 between the host computer 630 and UE 691, in response to variations in the measurement results. The measurement procedure and/or the network functionality for reconfiguring the OTT connection 750 may be implemented in the software 711 of the host computer 630 or in the software 731 of the UE 691, or both. In embodiments, sensors (not shown) may be deployed in or in association with communication devices through which the OTT connection 750 passes; the sensors may participate in the measurement procedure by supplying values of the monitored quantities exemplified above, or supplying values of other physical quantities from which software 711, 731 may compute or estimate the monitored quantities. The reconfiguring of the OTT connection 750 may include message format, retransmission settings, preferred routing etc.; the reconfiguring need not affect the base station 612, and it may be unknown or imperceptible to the base station 612. Such procedures and functionalities may be known and practiced in the art. In certain embodiments, measurements may involve proprietary UE signaling facilitating the host computer's 630 measurements of throughput, propagation times, latency and the like. The measurements may be implemented in that the software 711, 731 causes messages to be transmitted, in particular empty or 'dummy' messages, using the OTT connection 750 while it monitors propagation times, errors etc.

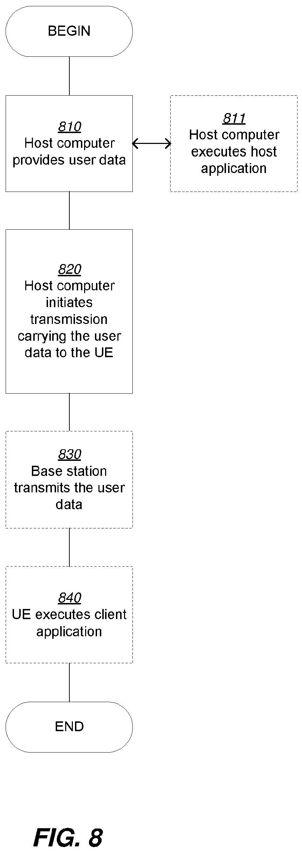

Figure 8 is a flowchart illustrating a method implemented in a communication system, in accordance with a non-claimed embodiment. The communication system includes a host computer, a base station and a UE which may be those described with reference to Figures 6 and 7. For simplicity of the present disclosure, only drawing references to Figure 8 will be included in this section. In a first step 810 of the method, the host computer provides user data. In an optional substep 811 of the first step 810, the host computer provides the user data by executing a host application. In a second step 820, the host computer initiates a transmission carrying the user data to the UE. In an optional third step 830, the base station transmits to the UE the user data which was carried in the transmission that the host computer initiated, in accordance with the teachings of the embodiments described throughout this disclosure. In an optional fourth step 840, the UE executes a client application associated with the host application executed by the host computer.

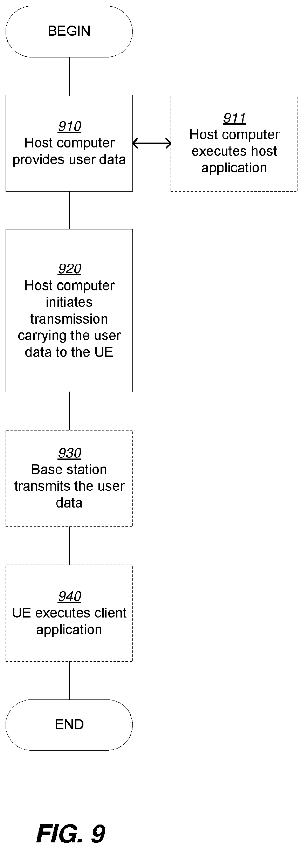

Figure 9 is a flowchart illustrating a method implemented in a communication system, in accordance with a non-claimed embodiment. The communication system includes a host computer, a base station and a UE which may be those described with reference to Figures 6 and 7. For simplicity of the present disclosure, only drawing references to Figure 9 will be included in this section. In a first step 910 of the method, the host computer provides user data. In an optional substep (not shown) the host computer provides the user data by executing a host application. In a second step 920, the host computer initiates a transmission carrying the user data to the UE. The transmission may pass via the base station, in accordance with the teachings of the embodiments described throughout this disclosure. In an optional third step 930, the UE receives the user data carried in the transmission.

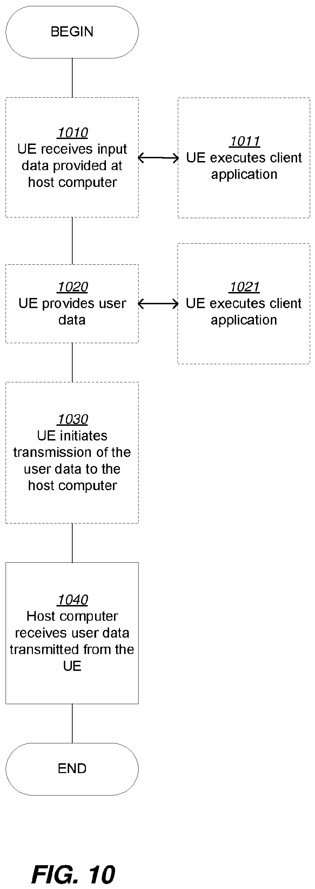

Figure 10 is a flowchart illustrating a method implemented in a communication system, in accordance with a non-claimed embodiment. The communication system includes a host computer, a base station and a UE which may be those described with reference to Figures 6 and 7. For simplicity of the present disclosure, only drawing references to Figure 10 will be included in this section. In an optional first step 1010 of the method, the UE receives input data provided by the host computer. Additionally, or alternatively, in an optional second step 1020, the UE provides user data. In an optional sub step 1021 of the second step 1020, the UE provides the user data by executing a client application. In a further optional substep 1011 of the first step 1010, the UE executes a client application which provides the user data in reaction to the received input data provided by the host computer. In providing the user data, the executed client application may further consider user input received from the user. Regardless of the specific manner in which the user data was provided, the UE initiates, in an optional third substep 1030, transmission of the user data to the host computer. In a fourth step 1040 of the method, the host computer receives the user data transmitted from the UE, in accordance with the teachings of the embodiments described throughout this disclosure.

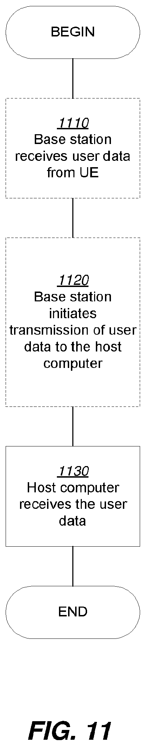

Figure 11 is a flowchart illustrating a method implemented in a communication system, in accordance with a non-claimed embodiment. The communication system includes a host computer, a base station and a UE which may be those described with reference to Figures 6 and 7. For simplicity of the present disclosure, only drawing references to Figure 11 will be included in this section. In an optional first step 1110 of the method, in accordance with the teachings of the embodiments described throughout this disclosure, the base station receives user data from the UE. In an optional second step 1120, the base station initiates transmission of the received user data to the host computer. In a third step 1130, the host computer receives the user data carried in the transmission initiated by the base station.

Accordingly, an additional embodiment may include a communication system including a host computer comprising processing circuitry configured to provide user data and a communication interface configured to forward the user data to a cellular network for transmission to a UE communicating with a serving node of the cellular network and configured to receive data from the serving node via a downlink carrier and to transmit data to the serving node via selective use of a first uplink carrier and an associated SUL carrier, such that only one of the first uplink carrier and the associated SUL carrier is used by the UE at any given time. The serving node is configured to receive, from the UE via one of the first uplink carrier and the associated SUL carrier, an uplink failure report, said uplink failure report indicating a failure of the first uplink carrier or the associated SUL carrier. The serving node is also configured to release the first uplink carrier or the associated SUL carrier, with respect to the UE, in response to said receiving.

The communication system may include the serving node and/or the UE, where the UE is configured to communicate with the serving node. The processing circuitry of the host computer may be configured to execute a host application, thereby providing the user data, and the UE may comprise processing circuitry configured to execute a client application associated with the host application.

An exemplary embodiment may include a method implemented in a communication system including a host computer, a serving node and a UE that is configured to receive data from the serving node via a downlink carrier and to transmit data to the serving node via selective use of a first uplink carrier and an associated SUL carrier, such that only one of the first uplink carrier and the associated SUL carrier is used by the UE at any given time. The method includes, at the host computer, providing user data and initiating a transmission carrying the user data to the UE via a cellular network comprising the serving node. The method comprises, at the serving node, receiving, from the UE via one of the first uplink carrier and the associated SUL carrier, an uplink failure report, said uplink failure report indicating a failure of the first uplink carrier or the associated SUL carrier. The method also comprises releasing the first uplink carrier or the associated SUL carrier, with respect to the UE, in response to said receiving. The method may further include, at the serving node, transmitting the user data. The user data may be provided at the host computer by executing a host application, the method further comprising, at the UE, executing a client application associated with the host application.

According to some exemplary embodiments, a communication system includes a host computer comprises processing circuitry configured to provide user data and a communication interface configured to forward user data to a cellular network for transmission to a UE. The UE comprises a radio interface configured to receive data from a serving node of the cellular network via a downlink carrier and transmit data to the serving node via selective use of a first uplink carrier and an associated SUL carrier, such that only one of the first uplink carrier and the associated SUL carrier is used by the UE at any given time. The UE comprises processing circuitry configured to detect a radio link problem for a currently used one of the first uplink carrier and the associated SUL carrier and, responsive to said detecting, transmit a random access preamble to the serving node on the first uplink carrier or the associated SUL carrier. The communication system may further include the UE. The cellular network may further include the serving node configured to communicate with the UE. The processing circuitry of the host computer may be configured to execute a host application, thereby providing the user data. The UE's processing circuitry may be configured to execute a client application associated with the host application.

An exemplary embodiment may include a method implemented in a communication system including a host computer, a serving node of a cellular network and a UE configured to receive data from the serving node via a downlink carrier and to transmit data to the serving node via selective use of a first uplink carrier and an associated SUL carrier, such that only one of the first uplink carrier and the associated SUL carrier is used by the UE at any given time. The method includes, at the host computer, providing user data and initiating a transmission carrying the user data to the UE via the cellular network comprising the serving node. The method at the UE comprises detecting a radio link problem for a currently used one of the first uplink carrier and the associated SUL carrier and, responsive to said detecting, transmitting a random access preamble to the serving node on the first uplink carrier or the associated SUL carrier. The method may further include, at the UE, receiving the user data from the serving node.

According to an exemplary embodiment, a communication system includes a host computer comprising a communication interface configured to receive user data originating from a transmission from a UE to a serving node of a cellular network. The UE comprises radio interface circuitry configured to receive data from the serving node via a downlink carrier and transmit data to the serving node via selective use of a first uplink carrier and an associated SUL carrier, such that only one of the first uplink carrier and the associated SUL carrier is used by the UE at any given time. The UE's processing circuitry is configured to detect a radio link problem for a currently used one of the first uplink carrier and the associated SUL carrier and, responsive to said detecting, transmit a random access preamble to the serving node on the first uplink carrier or the associated SUL carrier. The communication system may further include the UE. The communication system may further include the serving node, where the serving node comprises a radio interface configured to communicate with the UE and a communication interface configured to forward to the host computer the user data carried by a transmission from the UE to the serving node. The processing circuitry of the host computer may be configured to execute a host application, and the UE's processing circuitry may be configured to execute a client application associated with the host application, thereby providing the user data. The processing circuitry of the host computer may be configured to execute a host application, thereby providing request data, and the UE's processing circuitry may be configured to execute a client application associated with the host application, thereby providing the user data in response to the request data.

An embodiment may include a method implemented in a UE communicating with a serving node of a cellular network and configured to receive data from the serving node via a downlink carrier and to transmit data to the serving node via selective use of a first uplink carrier and an associated SUL carrier, such that only one of the first uplink carrier and the associated SUL carrier is used by the UE at any given time. The method comprises detecting a radio link problem for a currently used one of the first uplink carrier and the associated SUL carrier and, responsive to said detecting, transmitting a random access preamble to the serving node on the first uplink carrier or the associated SUL carrier. The method may further include providing user data and forwarding the user data to a host computer via the transmission to the serving node.

According to an exemplary embodiment, a method implemented in a communication system includes a host computer, a serving node of a cellular network and a UE configured to receive data from the serving node via a downlink carrier and to transmit data to the serving node via selective use of a first uplink carrier and an associated SUL carrier, such that only one of the first uplink carrier and the associated SUL carrier is used by the UE at any given time. The method comprises, at the host computer, receiving user data transmitted to the serving node from the UE. The method comprises, at the UE, detecting a radio link problem for a currently used one of the first uplink carrier and the associated SUL carrier and, responsive to said detecting, transmitting a random access preamble to the serving node on the first uplink carrier or the associated SUL carrier. The method may further comprise, at the UE, providing the user data to the serving node. The method may further comprise, at the UE, executing a client application, thereby providing the user data to be transmitted and, at the host computer, executing a host application associated with the client application. The method may further comprise, at the UE, executing a client application and receiving input data to the client application, the input data being provided at the host computer by executing a host application associated with the client application. The user data to be transmitted may be provided by the client application in response to the input data.

According to an exemplary embodiment, a communication system including a host computer comprises a communication interface configured to receive user data originating from a transmission from a UE to a serving node of a cellular network communicating with the UE, where the UE is configured to receive data from the serving node via a downlink carrier and to transmit data to the serving node via selective use of a first uplink carrier and an associated SUL carrier, such that only one of the first uplink carrier and the associated SUL carrier is used by the UE at any given time. The server node's processing circuitry is configured to receive, from the UE via one of the first uplink carrier and the associated SUL carrier, an uplink failure report, said uplink failure report indicating a failure of the first uplink carrier or the associated SUL carrier. The processing circuitry is also configured to release the first uplink carrier or the associated SUL carrier, with respect to the UE, in response to said receiving. The communication system may include the server node. The communication system may also include the UE, wherein the UE is configured to communicate with the serving node. The processing circuitry of the host computer may be configured to execute a host application, and the UE may be configured to execute a client application associated with the host application, thereby providing the user data to be received by the host computer.

Exemplary embodiments includes a method implemented in a communication system including a host computer, a serving node of a cellular network and a UE configured to receive data from the serving node via a downlink carrier and transmit data to the serving node via selective use of a first uplink carrier and an associated SUL carrier, such that only one of the first uplink carrier and the associated SUL carrier is used by the UE at any given time. The method comprises, at the host computer, receiving, from the serving node, user data originating from a transmission which the serving node has received from the UE, where the method comprises, at the UE, detecting a radio link problem for a currently used one of the first uplink carrier and the associated SUL carrier and, responsive to said detecting, transmitting a random access preamble to the serving node on the first uplink carrier or the associated SUL carrier. The method may further comprise, at the serving node, receiving the user data from the UE. The method may further comprise, at the serving node, initiating a transmission of the received user data to the host computer.

As discussed in detail above, the techniques described herein, e.g., as illustrated in the process flow diagrams of Figures 3 and 5, may be implemented, in whole or in part, using computer program instructions executed by one or more processors. It will be appreciated that a functional implementation of these techniques may be represented in terms of functional modules, where each functional module corresponds to a functional unit of software executing in an appropriate processor or to a functional digital hardware circuit, or some combination of both.

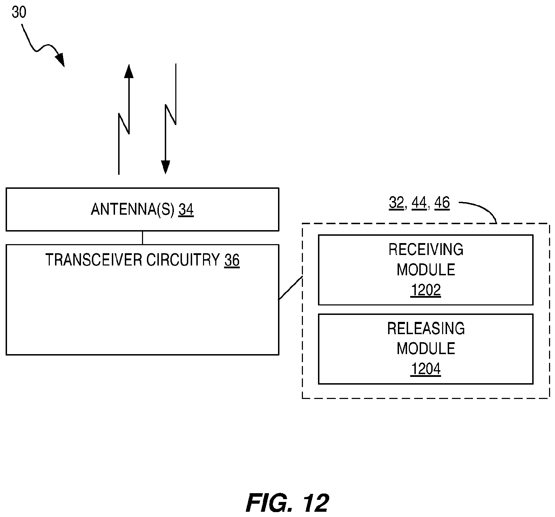

Figure 12 illustrates an example functional module or circuit architecture as may be implemented in a serving node 30 of a wireless communication network communicating with a UE that is configured to receive data from the serving node via a downlink carrier and to transmit data to the serving node via selective use of a first uplink carrier and an associated SUL carrier, such that only one of the first uplink carrier and the associated SUL carrier is used by the UE at any given time. The functional implementation includes a receiving module 1202 for receiving, from the UE via one of the first uplink carrier and the associated SUL carrier, an uplink failure report, said uplink failure report indicating a failure of the first uplink carrier or the associated SUL carrier, and a releasing module 1204 for releasing the first uplink carrier or the associated SUL carrier, with respect to the UE, in response to said receiving.

According to some non-claimed embodiments, a serving node of a wireless communication network communicating with a UE that is configured to receive data from the serving node via a downlink carrier and to transmit data to the serving node via selective use of a first uplink carrier and an associated SUL carrier, such that only one of the first uplink carrier and the associated SUL carrier is used by the UE at any given time, includes a receiving module for receiving, from the UE via one of the first uplink carrier and the associated SUL carrier, an uplink failure report, said uplink failure report indicating a failure of the first uplink carrier or the associated SUL carrier. The serving node also includes a releasing module for releasing the first uplink carrier or the associated SUL carrier, with respect to the UE, in response to said receiving.

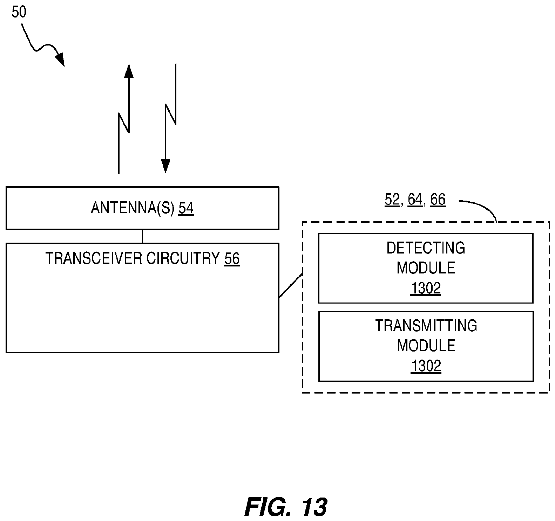

Figure 13 illustrates an example functional module or circuit architecture as may be implemented in a UE 50 communicating with a serving node of a wireless communication network and configured to receive data from the serving node via a downlink carrier and to transmit data to the serving node via selective use of a first uplink carrier and an associated SUL carrier, such that only one of the first uplink carrier and the associated SUL carrier is used by the UE at any given time. The implementation includes a detecting module 1302 for detecting a radio link problem for a currently used one of the first uplink carrier and the associated SUL carrier and a transmitting module 1304 for, responsive to said detecting, transmitting a random access preamble to the serving node on the first uplink carrier or the associated SUL carrier.

According to some embodiments, a UE communicating with a serving node of a wireless communication network and configured to receive data from the serving node via a downlink carrier and to transmit data to the serving node via selective use of a first uplink carrier and an associated supplementary uplink, SUL, carrier, such that only one of the first uplink carrier and the associated SUL carrier is used by the UE at any given time, includes a detecting module for detecting a radio link problem for a currently used one of the first uplink carrier and the associated SUL carrier and a transmitting module for, responsive to said detecting, transmitting a random access preamble to the serving node on the first uplink carrier or the associated SUL carrier.

## Claims

1. A method (500), in a user equipment, UE (50), communicating with a serving node (30) of a wireless communication network and configured to receive data from the serving node (30) via a downlink carrier and to transmit data to the serving node (30) via selective use of a first uplink carrier and an associated supplementary uplink, SUL, carrier, such that only one of the first uplink carrier and the associated SUL carrier is used by the UE at any given time, the method **characterized by**:
detecting (502) a radio link problem for a currently used one of the first uplink carrier and the associated SUL carrier; and
responsive to said detecting, transmitting (504) a random access preamble to the serving node on the currently unused one of the first uplink carrier and the associated SUL carrier, so as to initiate a switch from the currently used one of
the first uplink carrier and the associated SUL carrier to the currently unused one of the first uplink carrier and the associated SUL carrier.

2. The method of claim 1, wherein transmitting (504) the random access preamble to the serving node comprises using a contention-free random access resource previously allocated to the UE for the currently unused one of the first uplink carrier and the associated SUL carrier.

3. The method of claim 1, wherein transmitting (504) the random access preamble to the serving node comprises performing a contention-based random access procedure on the currently unused one of the first uplink carrier and the associated SUL carrier, responsive to determining that no contention-free random access resource is allocated to the UE for the currently unused one of the first uplink carrier and the associated SUL carrier.

4. The method of any of claims 1-3, wherein the method further comprises, upon a successful switch to the currently unused one of the first uplink carrier and the associated SUL carrier, transmitting (505) an uplink failure report to the serving node, said uplink failure report indicating a failure.

5. A user equipment, UE (50), configured to communicate with a serving node (30) of a wireless communication network, the UE (50) comprising:
transceiver circuitry (56) configured to receive data from the serving node (30) via a downlink carrier and transmit data to the serving node via selective use of a first uplink carrier and an associated supplementary uplink, SUL, carrier, such that only one of the first uplink carrier and the associated SUL carrier is used by the UE (50) at any given time; and **characterized by**:
processing circuitry (52) operatively associated with the transceiver circuitry (56) and configured to:
detect a radio link problem for a currently used one of the first uplink carrier and the associated SUL carrier; and
responsive to said detecting, transmit a random access preamble to the serving node (30) on the currently unused one of the first uplink carrier and the associated SUL carrier, so as to initiate a switch from the currently used one of the first uplink carrier and the associated SUL carrier to the
currently unused one of the first uplink carrier and the associated SUL carrier.

6. The UE (50) of claim 5, wherein the processing circuitry (52) is configured to transmit the random access preamble to the serving node (30) by using a contention-free random access resource previously allocated to the UE (50) for the currently unused one of the first uplink carrier and the associated SUL carrier.

7. The UE (50) of claim 5, wherein the processing circuitry (52) is configured to transmit the random access preamble to the serving node (30) by performing a contention-based random access procedure on the currently unused one of the first uplink carrier and the associated SUL carrier, responsive to determining that no contention-free random access resource is allocated to the UE (50) for the currently unused one of the first uplink carrier and the associated SUL carrier.

8. The UE (50) of any of claims 5-7, wherein the processing circuitry (52) is configured to, upon a successful switch to the currently unused one of the first uplink carrier and the associated SUL carrier, transmit an uplink failure report to the serving node (30), said uplink failure report indicating a failure.

9. The UE (50) of claim 8, wherein the uplink failure report identifies which uplink carrier the indicated failure corresponds to.

10. The UE (50) of claim 8 or 9, wherein the uplink failure report includes information indicating frequencies or bandwidths in which an uplink carrier can be configured for the UE (50).

11. A computer program product, comprising instructions that, when executed on at least one processing circuit, cause the at least one processing circuit to carry out a method according to any one of claims 1-4.

## Patentansprüche

1. Verfahren (500) in einer Benutzereinrichtung, UE (50), die mit einem versorgenden Knoten (30) eines drahtlosen Kommunikationsnetzwerks kommuniziert und so konfiguriert ist, dass sie Daten über einen Downlink-Träger vom versorgenden Knoten (30) empfängt und Daten durch selektive Verwendung eines ersten Uplink-Trägers und eines assoziierten zusätzlichen Uplink-,SUL- ,Trägers an den versorgenden Knoten (30) sendet, derart dass jederzeit nur einer des ersten Uplink-Trägers und des assoziierten SUL-Trägers von der UE verwendet wird, wobei das Verfahren **gekennzeichnet ist durch**:
Erkennen (502) eines Funkverbindungsproblems für einen gegenwärtig verwendeten des ersten Uplink-Trägers und des assoziierten SUL-Trägers; und
Senden (504) einer Direktzugriffspräambel an den versorgenden Knoten auf dem gegenwärtig nicht verwendeten des ersten Uplink-Trägers und des assoziierten SUL-Trägers in Reaktion auf das Erkennen, um einen Wechsel vom gegenwärtig verwendeten des ersten Uplink-Trägers und des assoziierten SUL-Trägers zu dem gegenwärtig nicht verwendeten des ersten Uplink-Trägers und des assoziierten SUL-Trägers einzuleiten.

2. Verfahren nach Anspruch 1, wobei das Senden (504) der Direktzugriffspräambel an den versorgenden Knoten ein Verwenden einer konfliktfreien Direktzugriffsressource umfasst, die der UE für den gegenwärtig nicht verwendeten des ersten Uplink-Trägers und des assoziierten SUL-Trägers vorher zugewiesen wurde.

3. Verfahren nach Anspruch 1, wobei das Senden (504) der Direktzugriffspräambel an den versorgenden Knoten in Reaktion auf ein Bestimmen, dass der UE keine konfliktfreie Direktzugriffsressource für den gegenwärtig nicht verwendeten des ersten Uplink-Trägers und des assoziierten SUL-Trägers zugewiesen ist, ein Durchführen einer konfliktbasierten Direktzugriffsprozedur auf dem gegenwärtig nicht verwendeten des ersten Uplink-Trägers und des assoziierten SUL-Trägers umfasst.

4. Verfahren nach einem der Ansprüche 1 bis 3, wobei das Verfahren bei erfolgreichem Wechsel zum gegenwärtig nicht verwendeten des ersten Uplink-Trägers und des assoziierten SUL-Trägers ferner ein Senden (505) einer Uplink-Fehlermeldung an den versorgenden Knoten umfasst, wobei die Uplink-Fehlermeldung einen Fehler angibt.

5. Benutzereinrichtung, UE (50), die zum Kommunizieren mit einem versorgenden Knoten (30) eines drahtlosen Kommunikationsnetzwerks konfiguriert ist, wobei die UE (50) umfasst:
eine Sendeempfängerschaltungsanordnung (56), die so konfiguriert ist, dass sie Daten über einen Downlink-Träger vom versorgenden Knoten (30) empfängt und Daten durch selektive Verwendung eines ersten Uplink-Trägers und eines assoziierten zusätzlichen Uplink-,SUL- ,Trägers an den versorgenden Knoten sendet, derart dass jederzeit nur einer des ersten Uplink-Trägers und des assoziierten SUL-Trägers von der UE (50) verwendet wird; und **gekennzeichnet ist durch**:
eine Verarbeitungsschaltungsanordnung (52), die mit der Sendeempfängerschaltungsanordnung (56) funktionell verbunden und konfiguriert ist zum:
Erkennen eines Funkverbindungsproblems für einen gegenwärtig verwendeten des ersten Uplink-Trägers und des assoziierten SUL-Trägers; und
Senden einer Direktzugriffspräambel an den versorgenden Knoten (30) auf dem gegenwärtig nicht verwendeten des ersten Uplink-Trägers und des assoziierten SUL-Trägers in Reaktion auf das Erkennen,
um einen Wechsel vom gegenwärtig verwendeten des ersten Uplink-Trägers und des assoziierten SUL-Trägers zu dem gegenwärtig nicht verwendeten des ersten Uplink-Trägers und des assoziierten SUL-Trägers einzuleiten.

6. UE (50) Anspruch 5, wobei die Verarbeitungsschaltungsanordnung (52) so konfiguriert ist, dass sie die Direktzugriffspräambel durch Verwenden einer konfliktfreien Direktzugriffsressource, die der UE (50) für den gegenwärtig nicht verwendeten des ersten Uplink-Trägers und des assoziierten SUL-Trägers vorher zugewiesen wurde, an den versorgenden Knoten (30) sendet.

7. UE (50) Anspruch 5, wobei die Verarbeitungsschaltungsanordnung (52) so konfiguriert ist, dass sie die Direktzugriffspräambel in Reaktion auf ein Bestimmen, dass der UE (50) keine konfliktfreie Direktzugriffsressource für den gegenwärtig nicht verwendeten des ersten Uplink-Trägers und des assoziierten SUL-Trägers zugewiesen ist, durch Durchführen einer konfliktbasierten Direktzugriffsprozedur auf dem gegenwärtig nicht verwendeten des ersten Uplink-Trägers und des assoziierten SUL-Trägers an den versorgenden Knoten (30) sendet.

8. UE (50) nach einem der Ansprüche 5 bis 7, wobei die Verarbeitungsschaltungsanordnung (52) so konfiguriert ist, dass sie bei erfolgreichem Wechsel zum gegenwärtig nicht verwendeten des ersten Uplink-Trägers und des assoziierten SUL-Trägers eine Uplink-Fehlermeldung an den versorgenden Knoten (30) sendet, wobei die Uplink-Fehlermeldung einen Fehler angibt.

9. UE (50) nach Anspruch 8, wobei die Uplink-Fehlermeldung identifiziert, welchem Uplink-Träger der angegebene Fehler entspricht.

10. UE (50) nach Anspruch 8 oder 9, wobei die Uplink-Fehlermeldung Informationen umfasst, die Frequenzen oder Bandbreiten angeben, in welchen ein Uplink-Träger für die UE (50) konfiguriert sein kann.

11. Computerprogramm, umfassend Anweisungen, die bei Ausführung auf mindestens einer Verarbeitungsschaltung die mindestens eine Verarbeitungsschaltung zum Durchführen des Verfahrens nach einem der Ansprüche 1 bis 4 veranlassen.

## Revendications

1. Procédé (500), dans un équipement utilisateur, UE (50), communiquant avec un nœud de desserte (30) d'un réseau de communication sans fil et configuré pour recevoir des données depuis le nœud de desserte (30) via une porteuse de liaison descendante et pour transmettre des données au nœud de desserte (30) via une utilisation sélective d'une première porteuse de liaison montante et d'une porteuse de liaison montante supplémentaire, SUL, associée de sorte qu'une seule parmi la première porteuse de liaison montante et la porteuse SUL associée soit utilisée par l'UE à tout moment donné, le procédé étant **caractérisé par** :
la détection (502) d'un problème de liaison radio pour l'une couramment utilisée parmi la première porteuse de liaison descendante et la porteuse SUL associée ; et
en réponse à ladite détection, la transmission (504) d'un préambule d'accès aléatoire au nœud de desserte sur l'une couramment inutilisée parmi la première porteuse de liaison descendante et la porteuse SUL associée, de manière à initier une commutation de l'une couramment utilisée parmi la première porteuse de liaison montante et la porteuse SUL associée à l'une couramment inutilisée parmi la première porteuse de liaison montante et la porteuse SUL associée.

2. Procédé selon la revendication 1, dans lequel la transmission (504) du préambule d'accès aléatoire au nœud de desserte comprend l'utilisation d'une ressource d'accès aléatoire sans contention préalablement allouée à l'UE pour l'une couramment inutilisée parmi la première porteuse de liaison montante et la porteuse SUL associée.

3. Procédé selon la revendication 1, dans lequel la transmission (504) du préambule d'accès aléatoire au nœud de desserte comprend la réalisation d'une procédure d'accès aléatoire sans contention sur l'une couramment inutilisée parmi la première porteuse de liaison montante et la porteuse SUL associée, en réponse à la détermination qu'aucune ressource d'accès aléatoire sans contention n'est allouée à l'UE pour l'une couramment inutilisée parmi la première porteuse de liaison montante et la porteuse SUL associée.

4. Procédé selon l'une quelconque des revendications 1 à 3, dans lequel le procédé comprend en outre, lors d'une commutation réussie à l'une couramment inutilisée parmi la première porteuse de liaison montante et la porteuse SUL associée, la transmission (505) d'un rapport de défaillance de liaison montante au nœud de desserte, ledit rapport de défaillance de liaison montante indiquant une défaillance.

5. Equipement utilisateur, UE (50), configuré pour communiquer avec un nœud de desserte (30) d'un réseau de communication sans fil, l'UE (50) comprenant :
une circuiterie émettrice-réceptrice (56) configurée pour recevoir des données depuis le nœud de desserte (30) via une porteuse de liaison descendante et transmettre des données au nœud de desserte via une utilisation sélective d'une première porteuse de liaison montante et d'une porteuse de liaison montante supplémentaire, SUL, associée de sorte qu'une seule parmi la première porteuse de liaison montante et la porteuse SUL associée soit utilisée par l'UE (50) à tout moment donné ; et **caractérisé par** :
une circuiterie de traitement (52) associée de manière opérationnelle à la circuiterie émettrice-réceptrice (56) et configurée pour :
détecter un problème de liaison radio pour l'une couramment utilisée parmi la première porteuse de liaison descendante et la porteuse SUL associée ;
en réponse à ladite détection, transmettre un préambule d'accès aléatoire au nœud de desserte (30) sur l'une couramment inutilisée parmi la première porteuse de liaison descendante et la porteuse SUL associée, de manière à initier une commutation de l'une couramment utilisée parmi la première porteuse de liaison montante et la porteuse SUL associée à l'une couramment inutilisée parmi la première porteuse de liaison montante et la porteuse SUL associée.

6. UE (50) selon la revendication 5, dans lequel la circuiterie de traitement (52) est configurée pour transmettre le préambule d'accès aléatoire au nœud de desserte (30) par l'utilisation d'une ressource d'accès aléatoire sans contention préalablement allouée à l'UE (50) pour l'une couramment inutilisée parmi la première porteuse de liaison montante et la porteuse SUL associée.

7. UE (50) selon la revendication 5, dans lequel la circuiterie de traitement (52) est configurée pour transmettre le préambule d'accès aléatoire au nœud de desserte (30) par la réalisation d'une procédure d'accès aléatoire sans contention sur l'une couramment inutilisée parmi la première porteuse de liaison montante et la porteuse SUL associée, en réponse à la détermination qu'aucune ressource d'accès aléatoire sans contention n'est allouée à l'UE (50) pour l'une couramment inutilisée parmi la première porteuse de liaison montante et la porteuse SUL associée.

8. UE (50) selon l'une quelconque des revendications 5 à 7, dans lequel la circuiterie de traitement (52) est configurée pour, lors d'une commutation réussie à l'une couramment inutilisée parmi la première porteuse de liaison montante et la porteuse SUL associée, transmettre un rapport de défaillance de liaison montante au nœud de desserte (30), ledit rapport de défaillance de liaison montante indiquant une défaillance.

9. UE (50) selon la revendication 8, dans lequel le rapport de défaillance de liaison montante identifie à quelle porteuse de liaison montante la défaillance indiquée correspond.

10. UE (50) selon la revendication 8 ou 9, dans lequel le rapport de défaillance de liaison montante inclut des informations indiquant des fréquences ou des bandes passantes auxquelles une porteuse de liaison montante peut être configurée pour l'UE (50).

11. Produit de programme informatique comprenant des instructions qui, lorsqu'elles sont exécutées sur au moins un circuit de traitement, amènent l'au moins un circuit de traitement à réaliser un procédé selon l'une quelconque des revendications 1 à 4.
